# EUROPEAN PATENT APPLICATION

(11) **EP 2 528 004 A1**
(43) Date of publication of application: **28.11.2012**
(21) Application number: 11180131.2
(22) Date of filing: 06.09.2011
(51) Int. Cl.: G06F 21/00

(54) **Secure removable media and method for managing the same**

(30) Priority: 25.05.2011 US 115457
(71) Applicant: ConDel International Technologies Inc., George Town, Cayman KY1-1203 (GB)
(72) Inventor: Lin, Yeu-Chung, Erlin Township, Changhua County 526 (TW); Su, Chih-Sheng, Zhubei City, Hsinchu County 302 (TW)
(74) Representative: 2K Patentanwälte Blasberg Kewitz & Reichel

(57) **Abstract**

The invention provides a secure removable media. In one embodiment, the secure removable media comprises a non-volatile memory and a controller. The non-volatile memory corresponds to a media identifier, and comprises a public area, a bidden area, and a reserved hidden area for data storage, wherein a security program is stored in the public area, and a first firmware for retrieving the media identifier and a second firmware for accessing the hidden area are stored in the reserved hidden area. The controller receives secure data from an external device. The security program uses the first firmware to retrieve the media identifier from the secure removable media, generates an encryption key according to the media identifier given by the first firmware, encrypt the secure data according to the encryption key to obtain an encrypted secure data, and uses the second firmware to write the encrypted secure data to the hidden area. When the secure data is to be retrieved from the secure removable media, the security program reads the encrypted secure data from the hidden area, retrieves the media identifier from the non-volatile memory, generates a decryption key according to the media identifier given by the first firmware, and decrypts the encrypted secure data according to the decryption key to obtain the secure data.

## Description

### CROSS REFERENCE TO RELATED APPLICATIONS

This Application claims priority of US Patent Application No. 13/115,457, filed on May 25, 2011, the entirety of which is incorporated by reference herein.

### BACKGROUND OF THE INVENTION

### Field of the Invention

The invention relates to data storage, and more particularly to storage of secure data.

### Description of the Related Art

Digital rights management (DRM) is a term for access control technologies that are used by hardware manufacturers, publishers, copyright holders and individuals to limit the use of digital contents. DRM technologies attempt to control use of digital media by preventing unauthorized access, copying or conversion to other formats by end users. Digital rights management is used by companies such as Sony, Amazon, Apple Inc., and Microsoft.

When an end user wants to play a digital content, the end user downloads the digital content from a DRM server to a client-end device, and the DRM server issues a rights object to the client-end device. The end user can then play the digital content stored in the client-end device according to the rights object. If the digital content is copied from an authorized device to an unauthorized device, because the unauthorized device does not have a rights object stored therein, the end usher cannot play the copied digital contents on the unauthorized device. Because an ordinary DRM server does not allow the end user to move a rights object from a client-end device to other devices, the end user, can only play the digital contents on the client-end device which has been connected to the DRM server to acquire the corresponding rights object via a network connection; it is inconvenient for the end user.

The Open Mobile Alliance (OMA) has established an OMA DRM 2.0/2.1 standard which allows an end user to move a rights object from a client-end device to a secure removable media (SRM). Examples of secure removable media may be a secure digital (SD) card, a USB disk, or a multi-media card (MMC). The end user can therefore use the rights object stored in the secure removable media to play the digital contents stored in the secure removable media, which is referred to as local consumption. The SRM standard, however, does not disclose how to store and retrieve the rights object in a secure fashion on the secure removable media. Thus, a method for managing the rights object stored in the secure removable media according to the OMADRM 2.0/2.1 standard is required.

### BRIEF SUMMARY OF THE INVENTION

The invention provides a secure removable media. In one embodiment, the secure removable media comprises a non-volatile memory and a controller. The secure removable media corresponds to a media identifier, which is a number physically inscribed on the non-volatile memory semiconductor chip and is not stored in the regular non-volatile memory cells or other one-time-programmable memory such as ROM (read only memory) , and comprises a public area, a hidden area, and a reserved hidden area for data storage, wherein at least one security program is stored in the public area, and a first firmware for retrieving the media identifier and a second firmware for accessing the hidden area are stored in the reserved hidden area. The controller receives secure data from an external device. The security program then uses the first firmware to retrieve the media identifier from the secure removable media, generates an encryption key according to the media identifier given by the firmware 132, encrypts the secure data according to the encryption key to obtain an encrypted secure data, and uses the second firmware to write the encrypted secure data to the hidden area.

The invention also provides a method for managing a secure removable media. In one embodiment, the secure removable media comprises a non-volatile memory and a controller. The secure removable media corresponds to a media identifier, which is a number physically inscribed on the non-volatile memory semiconductor chip and is not stored in the regular non-volatile memory cells or other one₋time-programmable memory such as ROAM (read only memory); and the secure removable media is divided into a public area, a hidden area, and a reserved hidden area for data storage. First, a first firmware for retrieving the media identifier and a second firmware for accessing the hidden area are stored in the reserved hidden area. Secure data is then sent by an external device to the secure removable media. The first firmware is then used by the controller to retrieve the media identifier from the secure removable media. An encryption key is then generated according to the media identifier given by the firmware 132 by the security program. The secure data is then encrypted according to the encryption key in order to obtain an encrypted secure data. The second firmware is then used by the controller to write the encrypted secure data to the hidden area.

The invention further provides a secure removable media. In one embodiment, the secure removable media comprises a non-volatile memory and a controller. The secure removable media corresponds to a media identifier, which is a number physically inscribed on the non-volatile memory semiconductor chip and is not stored in the regular non-volatile memory cells or other one-time-programmable memory such as ROM (read only memory), and comprises a public area, a hidden area, and a reserved hidden area for data storage, wherein at least one security program is stored in the public area, and a first firmware for retrieving the media identifier and a second firmware for accessing the hidden area are stored in the reserved hidden area. The controller receives an execution program from an external device, and then the execution program is linked to the security program. The security program then uses the first firmware to retrieve the media identifier from the secure removable media, generates a first program identifier corresponding to the execution program and the secure removable media according to the media identifier given by the firmware 132, and uses the second firmware to write the first program identifier to the hidden area.

The invention also provides a method for managing a secure removable media. In one embodiment, the secure removable media comprises a non-volatile memory and a controller, wherein the secure removable media corresponds to a media identifier, which is a number physically inscribed on the non-volatile memory semiconductor chip and is not stored in the regular non-volatile memory cells or other one-time-programmable memory such as ROM (read only memory), and the secure removable media is divided into a public area, a hidden area, and a reserved hidden area for data storage. First, a first firmware for retrieving the media identifier and a second firmware for accessing the hidden area are stored in the reserved hidden area. An execution program is then stored by an external device to the secure removable media. The first firmware is then used by the controller to retrieve the media identifier from the secure removable media. A first program identifier corresponding to the execution program and the secure removable media is then generated by the security program according to the media identifier given by the firmware. The second firmware, is then used by the controller to write the first program identifier to the hidden area.

The invention also provides a secure removable media. In one embodiment, the secure removable media is coupled to a client-end device comprising a digital rights management (DRM) agent, and comprises a non-volatile memory and a controller. The secure removable media corresponds to a media identifier, which is a number physically inscribed on the non-volatile memory semiconductor chip and is not stored in the regular non-volatile memory cells or other one-time-programrnalale memory such as ROM (read only memory), and comprises a public area, a hidden area, and a reserved hidden area for data storage, wherein a secure removable media (SRM) agent is stored in the public area, and a first firmware for retrieving the media identifier and a second firmware for accessing the hidden area are stored in the reserved hidden area. The controller receives a rights object and secure data from the DRM agent of the client-end device. The SRM agent then uses the first firmware to retrieve the media identifier from the secure removable media, generates an encryption key according to the media identifier given by the firmware 132, encrypts the rights object and the secure data according to the encryption key to obtain an encrypted rights object and encrypted secure data, and uses the second firmware to write the encrypted rights object and the encrypted secure data to the hidden area.

The invention provides a method for managing a secure removable media. In one embodiment, the secure removable media is coupled to a client-end device comprising a digital rights management (DRM) agent; the secure removable media comprises a non-volatile memory and a controller. The secure removable media corresponds to a media identifier, which is a number physically inscribed on the non-volatile memory semiconductor chip and is not stored in the regular non-volatile memory cells or other one-time-programmable memory such as ROM (read only memory), and the secure removable media is divided into a public area, a hidden area, and a reserved hidden area for data storage. First, a secure removable media (SRM) agent is stored in the public area of the secure removable media. A first firmware for retrieving the media identifier and a second firmware for accessing the hidden area are then stored in the reserved hidden area. A rights object and secure data are then sent from the DRM agent of the client-end device to the secure removable media. The DRM agent is then executed to use the first firmware to retrieve the media identifier from the secure removable media, to generate an encryption key according to the media identifier given by the firmware 132, to encrypt the rights object and the secure data according to the encryption key to obtain an encrypted rights object and encrypted secure data, and to use the second firmware to write the encrypted rights object and the encrypted secure data to the hidden area.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a block diagram of a secure removable media capable of storing secure data according to the invention;

Fig. 2 is a block diagram of a security program according to the invention;

Fig. 3A is a flowchart of a method for writing secure data to a secure removable media according to the invention;

Fig. 3B is a flowchart of a method for reading secure data from a secure removable media according to the invention;

Fig. 4A is a flowchart of a method for writing an execution program to a secure removable media according to the invention;

Fig. 4B is a flowchart of a method for executing an execution program according to the invention;

Fig. 5 is a block diagram of a digital rights management (DRM) system according to the invention;

Fig. 6 is a block diagram of a secure removable media of a DRM system according to the invention;

Fig. 7 is a block diagram of a SRM agent according to the invention;

Fig. 8A is a flowchart of a method for writing a rights object and secure data to a secure removable media according to the invention;

Fig. 8B is a flowchart of a method for reading a rights object and secure data from a secure removable media according to the invention;

Fig. 9 is a flowchart of a method of local consumption of a DRM content according to the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

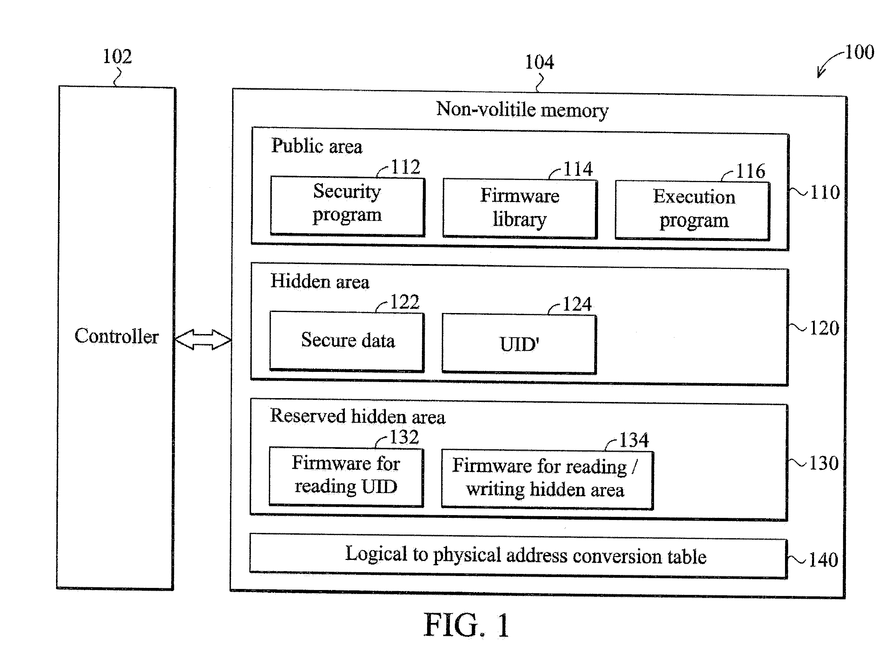

Referring to Fig. 1, a block diagram of a secure removable media 100 capable of storing secure data according to the invention is shown. In one embodiment, the secure removable media 100 comprises a controller 102 and a non-volatile memory 104. The secure removable media 100 could be a secure digital (SD) memory card, a multi-media card (MMC), or a USB disk. The non-volatile memory 104 has a media identifier DID corresponding thereto, and the secure removable media 100 can therefore be identified according to the media identifier UID given by the firmware 132. The media identifier UID is a number physically inscribed on the semiconductor chip of the non-volatile memory 104 and is not stored in the regular non-volatile memory cells or other one-time-programmable memory such as ROM (read only memory). In one embodiment, the media identifier QUID is a chip serial number physically marked on the chip of the non-volatile memory 104. Because the media identifier UID is not stored in the regular memory cells of the non-volatile memory 104, the media identifier UID cannot be copied via a bit-to-bit mirror imaging process.

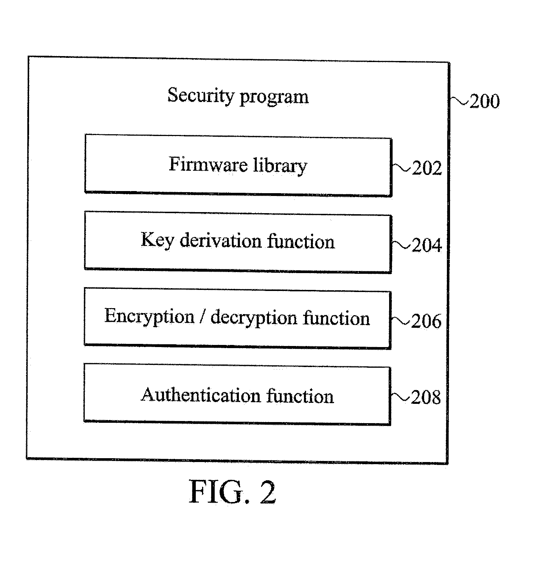

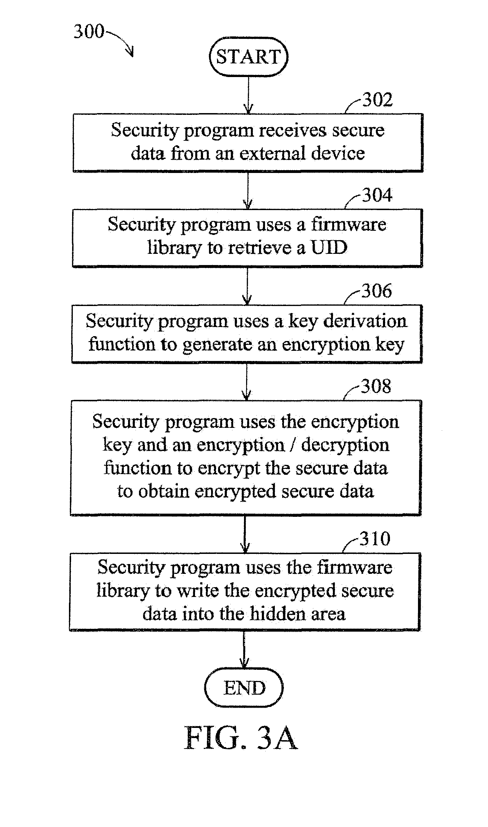

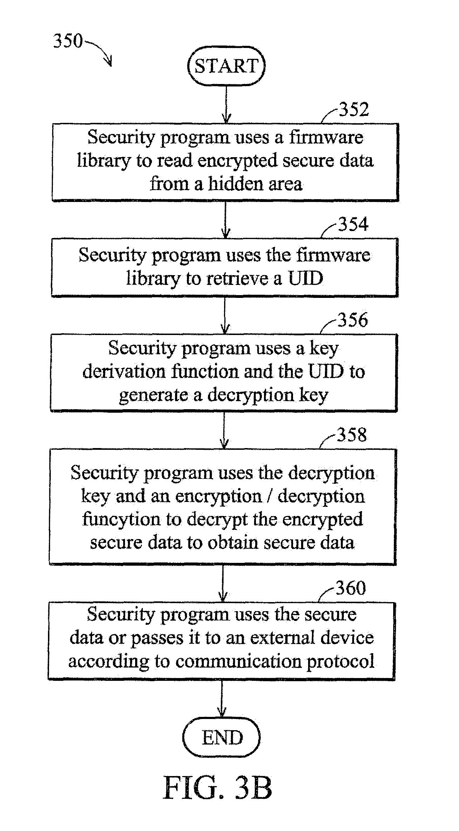

In one embodiment, a storage space of the non-volatile memory 104 is divided into a public area 110, a hidden area 120, and a reserved hidden area 130. The storage space of the public area 110 can be accessed by an end user on demand. The storage space of the hidden area 120 and the reserved hidden area 130 cannot be accessed by the end user. A logical-to-physical address conversion table 140 is stored in the non-volatile memory 104. Firmware 132 and 134 are stored in the reserved hidden area 130 of the non-volatile memory 104. The firmware 132 is used to read the media identifier UID from the non-volatile memory 104. In one embodiment, the firmware 132 contains a one-to-one mapping algorithm. After the firmware 132 reads an original media identifier from the nonvolatile memory 104, the firmware 132 uses the one-to-one mapping algorithm to derive a new media identifier UID from the original media identifier. The media identifier UID output by the firmware 132 is therefore different from the original media identifier inscribed on the semiconductor chip of the non-volatile memory 104 for the sake of security. This one-to-one mapping algorithm can provide extra protection. Even if the memory chip manufacturer leaks out the original media identifier, the media identifier UID used for generation of an encryption key and a decryption key is still unknown to an unauthorized party. The firmware 134 is used to read data from the hidden area 120 or write data to the hidden area 120. A security program 112 and a firmware library 114 are stored in the public area 110 of the non-volatile memory 104. The security program 112 is used to store secure data to the hidden area 120 of the non-volatile memory 104, and retrieve secure data from the hidden area 120. The functions of the security program 112 are further illustrated with Figs. 2, 3A, and 3B. The firmware library 114 is used to activate and call the firmware 132 and 134. In one embodiment, the firmware library 114 is a portion of the security program 112.

Referring to Fig. 2, a block diagram of a security program according to the invention is shown. When the secure removable media 100 receives secure data from an external device, the secure program stores the secure data to the hidden area 120 of the non-volatile memory 104. In one embodiment, the security program 200 comprises a firmware library 202, a key derivation function 204, an encryption / decryption function 206, and an authentication function 208. The firmware library 202 is used to activate the firmware 132 and 134 to read the media identifier UID or to access the hidden area 120. After the media identifier UID is given by the firmware 132, the key derivation function 204 generates an encryption key or a decryption key according to the media identifier UID given by the firmware, 132. Because the key generation function 204 is a one-to-one function, different encryption keys therefore correspond to different non-volatile memories of different secure removable media, and different decryption keys also correspond to different non-volatile memories of different secure removable media. The encryption / decryption function 206 is used to encrypt secure data according to an encryption key or decrypt an encrypted secure data according to a decryption keys. The authentication function 208 is used to determine whether an execution program 116 is executed in an authorized security removable media 110.

Referring to Fig. 3A, a flowchart of a method 300 for writing secure data to a secure removable media 100 according to the invention is shown. When the secure removable media 100 receives secure data needing secured storage from an external device (step 302), the security program 112 uses the firmware library 114 to activate the firmware 132 to retrieve the media identifier UID from the non-volatile memory 104 (step 304). The security program 112 then uses the key derivation function 204 to generate an encryption key according to the media identifier DID given by the firmware 132 (step 306). The security program 112 then uses the encryption / decryption function 206 to encrypt the secure data according to the encryption key to obtain an encrypted secure data (step 308). The security program 112 then uses the firmware library 114 to activate the firmware 134 to write the encrypted secure data 122 to the hidden area 120 (step 310). Because the encrypted secure data 122 is stored in the hidden area 120, an end user cannot directly access the encrypted secure data 122. Even if the encrypted secure data 122 is successfully copied to an unauthorized device, because the unauthorized device does not comprise the media identifier UID of the original non-volatile memory 104, the unauthorized device can not generate a correct decryption key to decrypt the encrypted secure data.

Referring to Fig. 3B, a flowchart of a method 350 for reading secure data from a secure removable media 100 according to the invention is shown. First, when the secure data is to be read, the security program 112 uses the firmware library 114 to call the firmware 134 to read encrypted secure data 122 from the hidden area 120 of the non-volatile memory 104 (step 352). The security program 112 then uses the firmware library 114 to call the firmware 132 to retrieve a media identifier UID from the non-volatile memory 104 (step 354). The security program 112 then uses the key derivation function 204 to generate a decryption key according to the media identifier UID given by the firmware 132 (step 356). The security program 112 then uses the encryption / decryption function to decrypt the encrypted secure data according to the decryption key to obtain the secure data (step 358). The security program 112 then uses the secure data or passes the secure data to an external device according to a communication protocol (step 360).

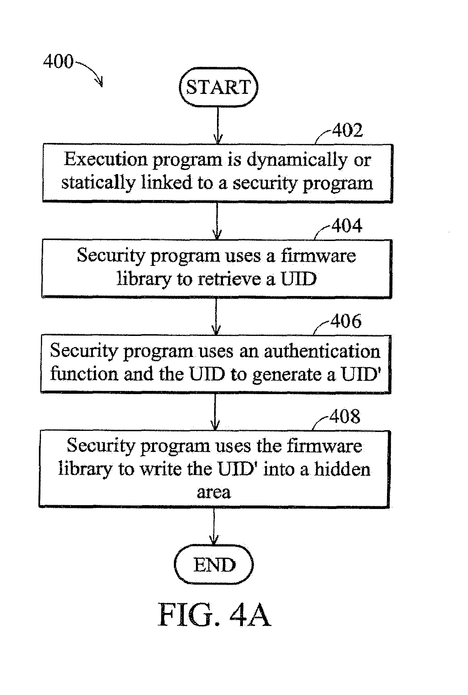

An execution program may also be required to be stored with secure protection. The execution program, however, cannot be stored in an encrypted format. The encrypted execution program cannot be directly executed by a processor. To prevent an execution program from being executed on an unauthorized device, a security program must determine whether the device storing the execution program is an unauthorized device before the execution program is executed, Referring to Fig. 4A, a flowchart of a method 400 for writing an execution program 116 to a secure removable media 100 according to the invention is shown. First, the execution program 116 is written to a public area 110 of the non-volatile memory 104. The execution program 116 is then dynamically or statically linked to the security program 112 (step 402), the security program 112 uses the firmware, library 114 to call the firmware 132 to retrieve the media identifier UID from the non-volatile memory 104 (step 404). The security program 112 then uses the authentication function 208 to generate a program identifier UID' according to the media identifier UID given by the firmware 132 (step 406), wherein the program identifier DID' corresponds to the execution program 116 and the non-volatile memory 104. In other words, different execution programs or different non-volatile memories of different secure removable media correspond to different program identifiers. The security program 112 then uses the firmware library 114 to call the firmware 134 to write the program identifier UID' to the hidden area 120 of the non-volatile memory 104 (step 408).

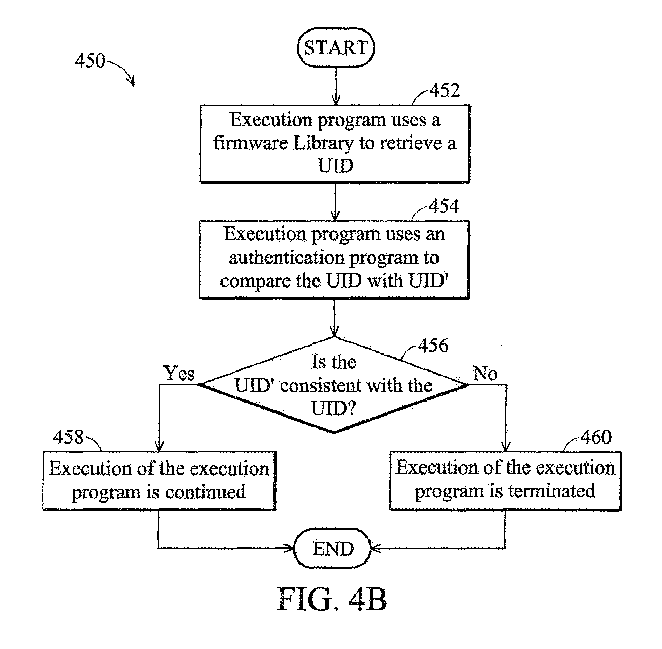

Referring to Fig. 4B, a flowchart of a method 450 for executing an execution program 116 according to the invention is shown. The execution program 116 first uses the firmware library 114 to call the firmware 132 to retrieve a media identifier UID from the non-volatile memory 104 (step 452). The execution program 116 then uses an authentication function 208 of the security program 112 to compare the media identifier UID given by the firmware 132 with the program identifier UID' (steps 454, 456). In one embodiment, the execution program 116 uses the authentication function 208 to generate a second program identifier UID" according to the media identifier UID given by the firmware 132, uses the firmware library 114 to call the firmware 134 to read the program identifier UID' from the hidden area 120, and uses the authentication function 208 to compare the program identifier UID' stored in the hidden area 120 with the program identifier UID" generated according to the media identifier UID given by the firmware 132.

The authentication function 208 then determines whether the program identifier UID" is identical to the program identifier UID'. If the secure removable media 100 is the authorized secure removable media having the execution program 116, which was originally stored therein, the program identifier UID" generated according to the media identifier UID of the non-volatile memory 104 must be identical to the program identifier UID' stored in the hidden area 120, such that the execution of the execution program 116 (step 458) will continue. If the secure removable media 100 is not an authorized secure removable media originally storing the execution program 116, the program identifier UID" generated according to the media identifier UID given by the firmware 132 of the unauthorized secure removable media 100 must be different from the program identifier UID' stored in the hidden area 120, such that the execution of the execution program 116 (step 460) will be terminated. Thus, even if the execution program 116 is copied to a non-volatile memory of an unauthorized device, the execution program 116 cannot be executed on the unauthorized device.

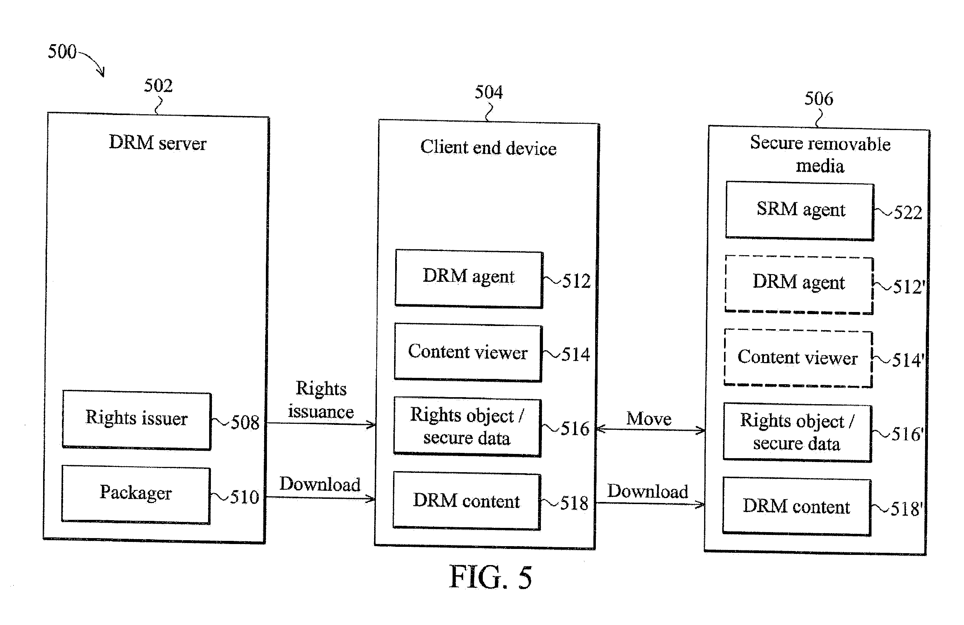

Referring to Fig. 5, a block diagram of a digital rights management (DRM) system 500 according to the invention is shown. In one embodiment, the DRM system 500 comprises a DRUM server 502, a client-end device 504, and a secure removable media 506, The DRM server 502 comprises a rights issuer 508 and a packager 510. The client-end device 504 is connected to the DRM server 502 via a network connection. For example, the client-end device 504 may be a PC or a cell phone. In one embodiment, the client-end device 504 comprises a DRM agent 512 and a content viewer 514. When the client-end device 504 wants to play or use a DRM content, the DRM agent 512 of the client-end device 504 sends a request to the DRM server 504, wherein the packager 510 of the DRM server 502 then sends the DRM content 518 to the client-end device 504, and the rights issuer 508 of the DRM server 502 sends a rights object 516 and secure data to the client-end device 504. In one embodiment, the secure data is a public key, a private key, or a certificate. The content viewer 514 of the client-end device 504 can then play or use the DRM content 518 according to the rights object 516.

A secure removable media 506 is connected to the client-end device. For example, the secure removable media 506 may be a secure digital (SD) memory card, a multi-media card (MMC), or a USB disk. In one embodiment, the secure removable media is connected to the client-end device via a USB connection, and comprises a secure removable media (SRM) agent 522. The client-end device 504 may write the DRM content 518 to the secure removable media 506 as the DRM content 518'. The client-end device 504 can also move the rights object 516 and secure data between the client-end device 504 and the secure removable media 506. In one embodiment, the secure removable media 506 also comprise a DRM agent 512' and a content viewer 514'. When the rights object 516' is moved to the secure removable media 506, the secure removable media 506 can directly play or use the DRM content 518' according to the rights object 516'.

When the rights object 516 is moved from the client-end device 504 to the secure removable media 506, the DRM agent 522 encrypts the rights object 516 and the secure data to obtain an encrypted rights object 516' and encrypted secure data, and writes the encrypted rights object 516' and encrypted secure data to a hidden area of the secure removable media 506. Because the encrypted rights object 516' stored in the secure removable media 506 is stored in the hidden area, a user cannot directly copy the encrypted rights object 516' from the secure removable media 506. In addition, because the rights object 516_{,} stored in the secure removable media 506 is encrypted, a user cannot directly use an encrypted rights object 516' copied from the secure removable media 506. The rights object of the DRM system 500 is therefore secured from unauthorized access and copying.

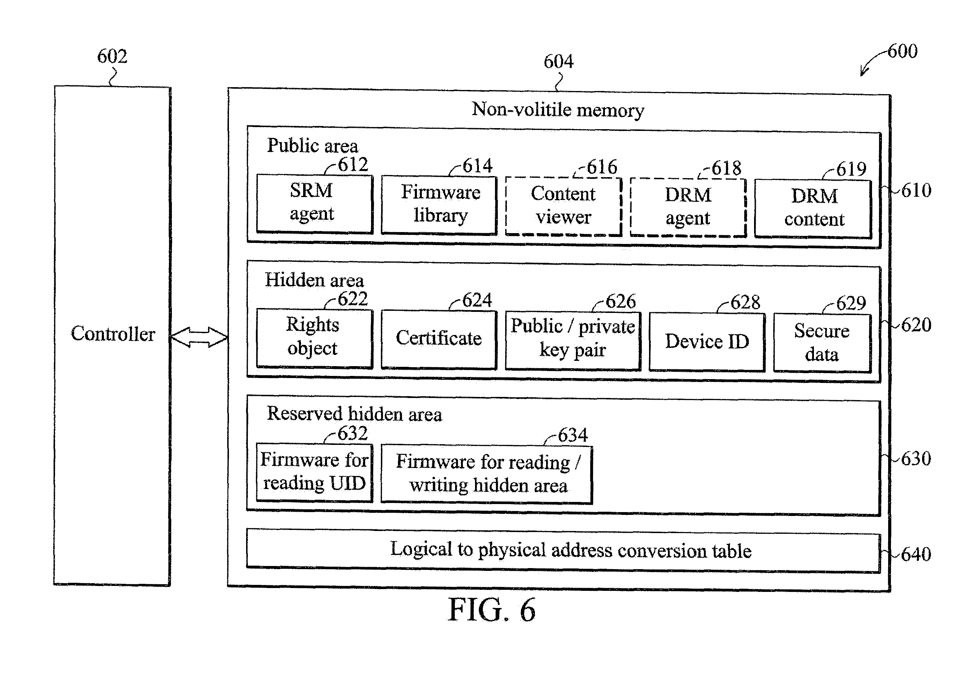

Referring to Fig. 6, a block diagram of a secure removable media 600 of the DRM system 500 according to the invention is shown. In one embodiment, the secure removable media 600 comprises a controller 602 and a non-volatile memory 604. The secure removable memory 600 is a secure digital (SD) memory card, a multi-media card (MMC), or a USB disk. The non-volatile memory 604 has a media identifier UID' corresponding thereto, and the secure removable media 600 can therefore be identified according to the media identifier UID. The media identifier UID is a number physically inscribed on the semiconductor chip of the non-volatile memory 604 and is not stored in the regular non-volatile memory cells or other one-time-programmable memory such as ROM (read only memory). In one embodiment, the media identifier UID is a chip serial number marked on the chip of the non-volatile memory 604. Because the media identifier UID is not stored in memory cells of the non-volatile memory 604, the media identifier UID cannot be copied via a bit-to-bit mirror imaging process.

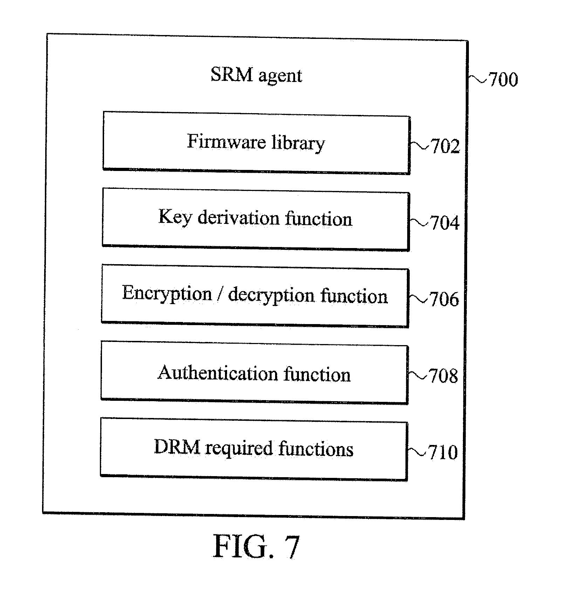

In one embodiment, a storage space of the non-volatile memory 604 is divided into a public area 610, a hidden area 620, and a reserved hidden area 630. The storage space of the public area 610 can be accessed by an end user on demand. In one embodiment, an SRM agent 612, a firmware library 614, a content viewer 616, a DRM agent 618, and a DRM content 619 are stored in the public area 610. The storage space of the hidden area 620 and the reserved hidden area 630 cannot be accessed by the end user. A logical-to-physical address conversion table 640 is stored in the non-volatile memory 604. Firmware 632 and 634 are stored in the reserved hidden area 630 of the non-volatile memory 604. The firmware 632 is used to read the media identifier UID from the non-volatile memory 604. In one embodiment, the firmware 632 contains a one-to-one mapping algorithm. After the firmware 632 reads an original media identifier from the nonvolatile memory 604, the firmware 632 uses the one-to-one mapping algorithm to derive a new media identifier UID from the original media identifier for the sake of security. The firmware 634 is used to read data from the hidden area 620 or write data to the hidden area 620. The DRM agent 612 is used to encrypt a rights object 622 and secure data 629 before the rights object 622 and the secure data 629 are stored to the hidden area 620 of the non-volatile memory 604. The functions of the SRIVI agent 612 are further illustrated with Figs. 7, 8A, 8B, and 9. The firmware library 614 is used to activate and call the firmware 632 and 634. In one embodiment, the firmware library 614 is a portion of the SRM agent 612.

Referring to Fig. 7, a block diagram of a SRM agent 700 according to the invention is shown. When the secure removable media 600 receives a rights object and secure data from a client-end device, the SRM agent 700 stores the rights object and the secure data to the hidden area 620 of the non-volatile memory 604. In one embodiment, the SRM agent 700 comprises a firmware library 702, a key derivation function 704, an encryption / decryption function 706, an authentication function 708, and DRM required functions 710. The firmware library 702 is used to activate the firmware 632 and 634 to read the media identifier UID or to access the hidden area 620. After the media identifier UID given by the firmware 132 is obtained, the key derivation function 704 generates an encryption key or a decryption key according to the media identifier DID given by the firmware 132. Because the key generation function 704 is a one-to-one function, different encryption keys therefore correspond to different non-volatile memories of different secure removable media, and different decryption keys also correspond to different non-volatile memories of different secure removable media. The encryption / decryption function 706 is used to encrypt a rights object and secure data according to an encryption key or decrypt an encrypted secure data according to a decryption key.

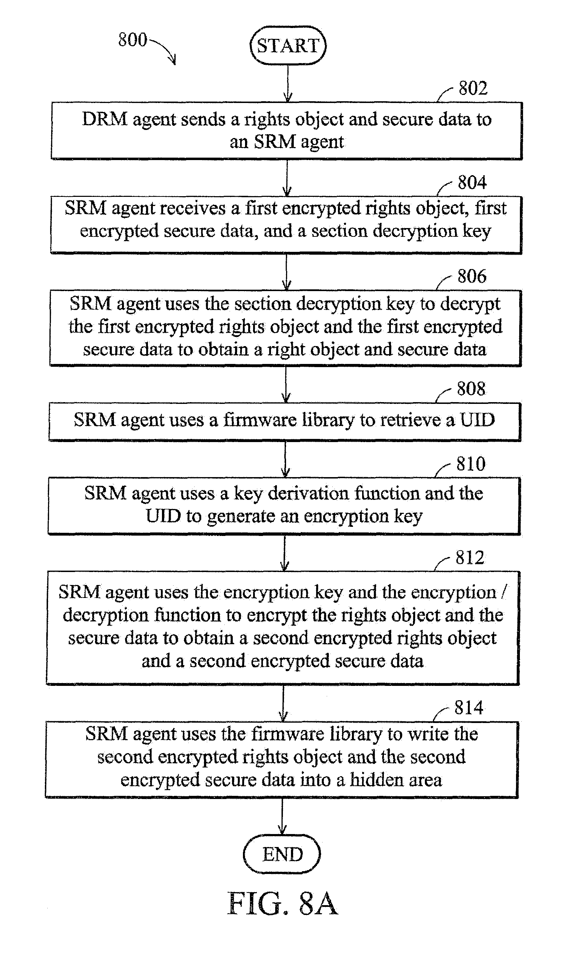

Referring to Fig. 8A, a flowchart of a method 800 for writing a rights object and secure data to a secure removable media 600 according to the invention is shown. A DRM agent of a client-end device first sends a rights object and secure data to an SRM agent 612 (step 802), and the SRM agent 612 receives a first encrypted rights object, a first encrypted secure data, and a section encryption key (step 804). The SRM agent then uses the section decryption key to decrypt the first encrypted rights object and the first encrypted secure data to obtain a rights object and secure data (step 806). The SRM agent 612 then uses the firmware library 614 to activate the firmware 632 to retrieve the media identifier UID from the non-volatile memory 604 (step 808). The SRM agent 612 then uses the key derivation function 704 to generate an encryption key according to the media identifier UID given by the firmware 132 (step 810). The SRM agent 612 then uses the encryption/decryption function 706 to encrypt the rights object and the secure data according to the encryption key to obtain a second encrypted rights object and a second encrypted secure data (step 812). The SRM agent 612 then uses the firmware library 614 to activate the firmware 634 to write the second encrypted rights object 622 and the second encrypted secure data 629 to the hidden area 620 (step 814). Because the second encrypted rights object 622 and the second encrypted secure data 629 is stored in the hidden area 620, an end user cannot directly access the second encrypted rights object 622 and the second encrypted secure data 629. Even if the second encrypted rights object 622 and the second encrypted secure data 629 are successfully copied to an unauthorized device, because the unauthorized device does not comprise the media identifier UID of the original non-volatile memory 604, the unauthorized device can not generate a correct decryption key to decrypt the second encrypted rights object 622 and the second encrypted secure data 629.

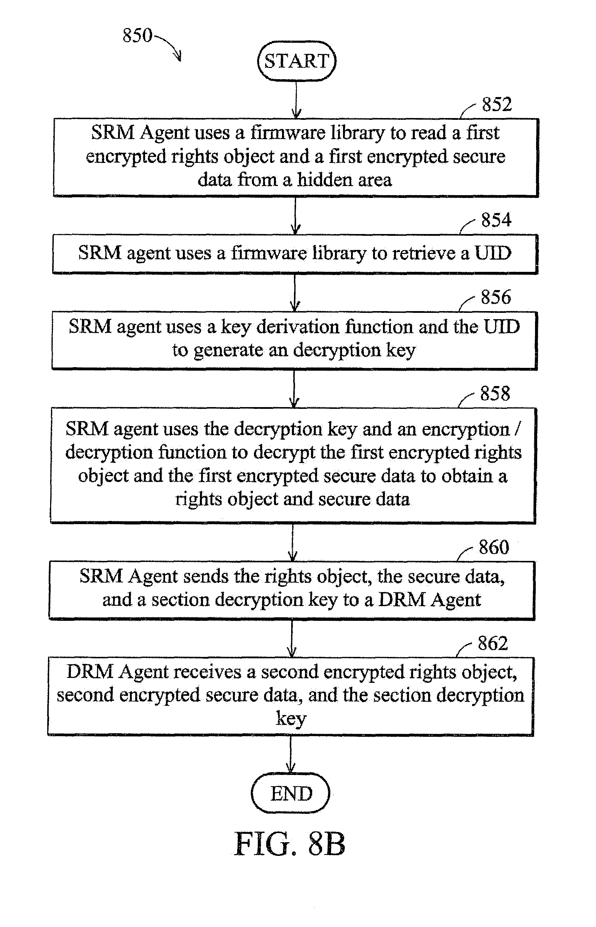

Referring to Fig. 8B, a flowchart of a method 850 for reading a rights object and secure data from a secure removable media 600 according to the invention is shown. The SRM agent 612 uses the firmware library 614 to call the firmware 634 to read a first encrypted rights object 622 and first encrypted secure data 629 from the hidden area 620 of the non-volatile memory 604 (step 852). The SRM agent 612 then uses the firmware library 614 to call the firmware 632 to retrieve a media identifier UID from the non-volatile memory 604 (step 854). The SRM agent 612 then uses the key derivation function 704 to generate a decryption key according to the media identifier UID (step 856) given by the firmware 132. The SRM agent 612 then uses the encryption / decryption function 706 to decrypt the encrypted rights object and the encrypted secure data according to the decryption key to obtain a rights object and secure data (step 858). The SUM agent 162 then encrypts a second rights object and second secure data according to the rights object and the secure data and sends the second rights object, the second secure data, and a section decryption key to a DRM server of a client-end device (step 860). Finally, the DRM server receives the second rights object, the second secure data, and the section decryption key (step 862).

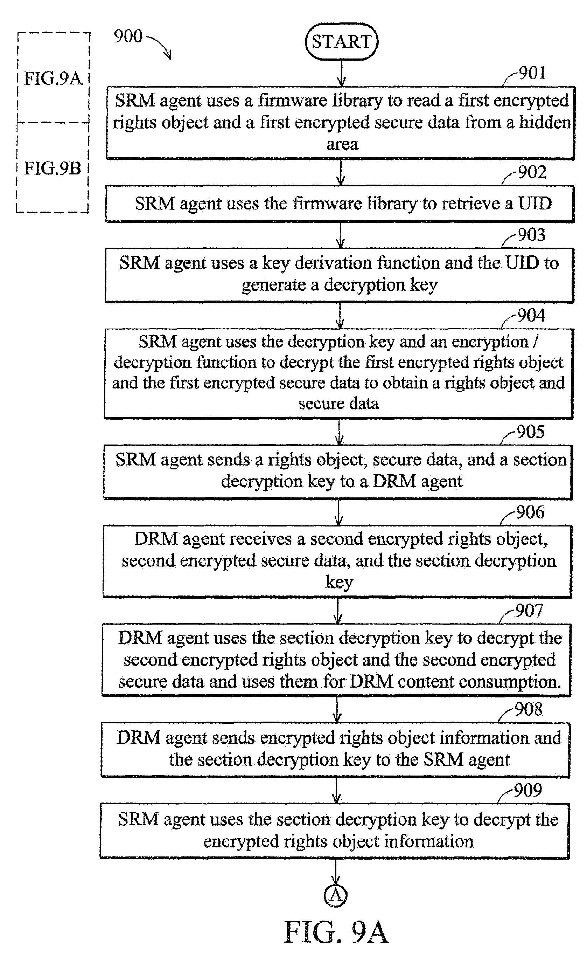

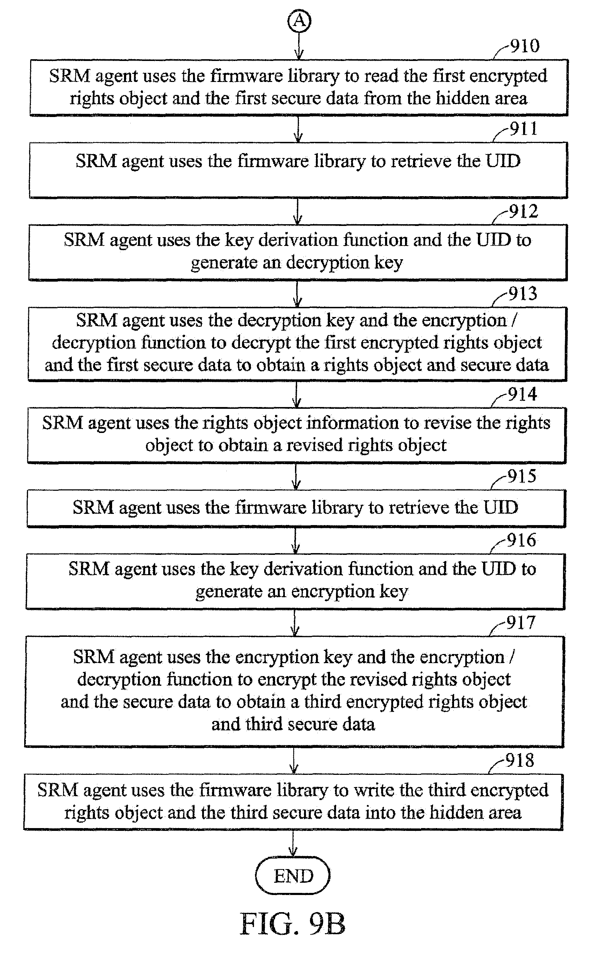

Referring to Fig. 9, a flowchart of a method 900 of local consumption of a DRM content according to the invention is shown. First, an SRM agent 612 uses a firmware library 614 to read a first encrypted rights object 622 and first encrypted secure data 629 from a hidden area 620 (step 901). The SRM agent 612 then uses the firmware library 614 to retrieve a media identifier UID corresponding to the secure removable media 600 (step 902). The SRM agent 612 then uses a key derivation function 704 and the media identifier UCD given by the firmware 132 to generate a decryption key (step 903). The SRM agent 612 then uses the decryption key and an encryption / decryption function 706 to decrypt the first encrypted rights object and the first encrypted secure data to obtain a rights object and secure data (step 904). The SRM agent 612 then sends the rights object, the secure data, and a section decryption key to a DRM agent 512 of a client-end device 504 (step 905). The DRM agent 512 then receives a second encrypted rights object, second encrypted secure data, and the section decryption key (step 906). The DRM agent 512 then uses the section decryption key to decrypt the second encrypted rights object and the second encrypted secure data to obtain the rights object and the secure data and uses them for DRM content consumption (step 907). The DRM agent 512 then sends encrypted rights object information and the section decryption key to the SRM agent 612 (step 908). The SRM agent 612 then uses the section decryption key to decrypt the encrypted rights object information to obtain rights object information (step 909).

The SRM agent 612 then uses the firmware, library 614 to read the first encrypted rights object 622 and the first secure data 629 from the hidden area 620 (step 910). The DRM agent 612 then uses the firmware library 614 to retrieve the media identifier UID corresponding to the secure removable media 600 (step 911). The SRM agent 612 then uses the key derivation function 704 and the media identifier UID given by the firmware 132 to generate a decryption key (step 912). The SRM agent 612 then uses the decryption key and the encryption / decryption function 706 to decrypt the first encrypted rights object and the first secure data to obtain a rights object and secure data (step 913). The SRM agent 612 then uses the rights object information to revise the rights object to obtain a revised rights object (step 914). The SRM agent 612 then uses the firmware library 614 to retrieve the media identifier UID given by the firmware 132 (step 915). The SRM agent 612 then uses the key derivation function 704 and the media identifier UID given by the firmware 132 to generate an encryption key (step 916). The SRM agent 612 then uses the encryption key and the encryption / decryption function 706 to encrypt a third encrypted rights object and third secure data according to the revised rights object and the secure data (step 917). The SRM agent 612 then uses the firmware library 614 to write the third encrypted rights object and the third secure data into the hidden area 620 (step 918).

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A secure removable media, coupled to a client-end device comprising a digital rights management (DRM) agent, comprising:
a non-volatile memory, corresponding to a media identifier, and comprising a public area, a hidden area, and a reserved hidden area for data storage, wherein a first firmware for retrieving the media identifier and a second firmware, for accessing the hidden area are stored in the reserved hidden area, and the media identifier is physically inscribed on the semiconductor chip of the non-volatile memory rather than stored in the regular memory cells;
a controller, receiving a rights object and secure data from the DRM agent of the client-end device; and
a secure removable media (DRM) agent, stored in the public area, using the first firmware to retrieve the media identifier from the non-volatile memory, generating an encryption key according to the media identifier given by the first firmware, encrypting the rights object and the secure data according to the encryption key to obtain an encrypted rights object and encrypted secure data, and using the second firmware to write the encrypted rights object and the encrypted secure data to the hidden area.

2. The secure removable media as claimed in claim 1, wherein the SRM agent comprises:
a firmware library, activating the first firmware to retrieve the media identifier from the non-volatile memory, and activating the second firmware to write the encrypted rights object and the encrypted secure data to the hidden area;
a key derivation function, generating the encryption key according to the media identifier given by the first firmware,; and
an encryption / decryption function, encrypting the rights object and the secure data according to the encryption key to obtain the encrypted rights object and the encrypted secure data.

3. The secure removable media as claimed in any of the preceding claims, wherein when the rights object and the secure data is to be retrieved from the secure removable media, the SRM agent reads the encrypted rights object and the encrypted secure data from the hidden area, retrieves the media identifier from the non-volatile memory, generates a decryption key according to the media identifier given by the first firmware, and decrypts the encrypted rights object and the encrypted secure data according to the decryption key to obtain the rights object and the secure data.

4. The secure removable media as claimed in claim 3, wherein the SRM Agent comprises:
a firmware library, activating the second firmware to read the encrypted rights object and the encrypted secure data from the hidden area, and activating the first firmware to retrieve the media identifier from the non-volatile memory;
a key derivation function, generating the decryption key according to the media identifier given by the first firmware; and
an encryption / decryption function, decrypting the encrypted rights object and the encrypted secure data according to the decryption key to obtain the rights object and me secure data.

5. The secure removable media as claimed in claim 3, wherein after the encrypted rights object and the encrypted secure data are decrypted to obtain the rights object, the secure removable media sends the rights object to the client-end device, the DRM agent uses the rights object for DRM content consumption, and the DRM agent of the client-end device then sends a rights object information back to the secure removable media.

6. The secure removable media as claimed in claim 5, wherein after the secure removable media receives the rights object information from the client-end device, the SRM agent reads the encrypted rights object from the hidden area, retrieves the media identifier from the non-volatile memory, generates the decryption key according to the media identifier given by the first firmware, decrypts the encrypted rights object according to the decryption key to obtain the rights object, revises the rights object according to the rights object information to obtain a revised rights object, uses the first firmware to retrieve the media identifier from the non-volatile memory, generates the encryption key according to the media identifier given by the first firmware, encrypts the revised rights object according to the encryption key to obtain an encrypted revised rights object, and uses the second firmware to write the encrypted revised rights object to the hidden area.

7. A method for managing a secure removable media, wherein the secure removable media is coupled to a client-end device comprising a digital rights management (DRM) agent, the secure removable media comprises a non-volatile memory and a controller, and the non-volatile memory corresponds to a media identifier, the non-volatile memory is divided into a public area, a hidden area, and a reserved hidden area for data storage, and the media identifier is physically inscribed on the semiconductor chip of the non-volatile memory rather than stored in the regular memory cells, comprising:
storing a secure removable media (SRM) agent in the public area of the non-volatile memory;
storing a first firmware for retrieving the media identifier and a second firmware for accessing the hidden area in the reserved hidden area;
sending a rights object and secure data from the DRM agent of the client-end device to the secure removable media;
executing the SRM agent to use the first firmware to retrieve the media identifier from the non-volatile memory;
executing the DRM agent to generate an encryption key according to the media identifier given by the first firmware;
executing the SRM agent to encrypt the rights object and the secure data according to the encryption key to obtain an encrypted rights object and encrypted secure data; and
executing the SRM agent to use the second firmware to write the encrypted rights object and the encrypted secure data to the hidden area.

8. The method as claimed in claim 7. wherein the method further comprises:
when the rights object and the secure data is to be retrieved from the secure removable media, executing the SRM agent to read the encrypted rights object and the encrypted secure data from the hidden area;
executing the SRM agent to retrieve the media identifier from the non-volatile memory;
executing the SRM agent to generate a decryption key according to the media identifier given by the first firmware; and
executing the SRM agent to decrypt the encrypted rights object and the encrypted secure data according to the decryption key to obtain the rights object and the secure data.

9. The method as claimed in claim 8, wherein the method further comprises:
after the encrypted rights object and the encrypted secure data are decrypted to obtain the rights object, sending the rights object to the client-end device by the secure removable media;
using the rights object for DRM content consumption by the DRM agent; and
sending by the DRM agent a rights object information back to the secure removable media.

10. The method as claimed in claim 9, wherein the method further comprises:
after the secure removable media receives the rights object information from the client-end device, executing the SRM agent to read the encrypted rights object from the hidden area;
executing the SRM agent to retrieve the media identifier from the non-volatile memory;
executing the SRM agent to generate the decryption key according to the media identifier given by the first firmware;
executing the DRM agent to decrypt the encrypted rights object according to the decryption key to obtain the rights object;
executing the SRM agent to revise the rights object according to the rights object information to obtain a revised rights object;
executing the SRM agent to use the first firmware to retrieve the media identifier from me non-volatile memory;
executing the SRM agent to generate the encryption key according to the media identifier given by the first firmware,;
executing the DRM agent to encrypt the revised rights object according to the encryption key to obtain an encrypted revised rights object; and
executing the SRM agent to use the second firmware, to write the encrypted revised rights object to the hidden area.

11. The method as claimed in any of claims 7 to 10, wherein the secure removable media is a secure digital (SD) memory card, a multi-media card (MMC), or a USB disk.
